Europäisches Patentamt

European Patent Office

Office européen des brevets

(19)

(11) Publication number: **0 187 807 B1**

# EUROPEAN PATENT SPECIFICATION

(12)

(45) Date of publication of patent specification: **04.12.91**   (51) Int. Cl.5: **A01K 11/00, A61B 5/00**

(21) Application number: **85903405.0**

(22) Date of filing: **12.07.85**

(86) International application number:
**PCT/NL85/00028**

(87) International publication number:
**WO 86/00498 (30.01.86 86/03)**

(54) **A MARKING ELEMENT FOR MARKING ANIMALS OR THE LIKE.**

(30) Priority: **13.07.84 NL 8402239**

(43) Date of publication of application:
**23.07.86 Bulletin 86/30**

(45) Publication of the grant of the patent:
**04.12.91 Bulletin 91/49**

(84) Designated Contracting States:
**AT BE CH DE FR GB IT LI LU NL SE**

(56) References cited:
**US-A- 3 788 278**
**US-A- 4 333 072**

**Wireless World, January 1971, "Giving farm animals electronic identities", see page 11, upper right corner**

(73) Proprietor: **PAALMAN, Berend, Johan**
**Deventerweg 1**
**NL-7245 AW Laren(NL)**

(72) Inventor: **VAN ZEGGEREN, Wilhelm, Aart**
**Van-Goghlaan 18**
**NL-2665 XC Bleiswijk(NL)**

(74) Representative: **Mommaerts, Johan Hendrik, Dipl.-Phys.**
**Exterpatent B.V. Postbus 90649**
**NL-2509 LP Den Haag(NL)**

## Description

The invention relates to a marking element as defined in the preamble of claim 1.

Such an element is known from an article in Wireless World (1971,01), which element comprises a relatively blunt stem to be pressed through a prepunched hole in the ear or skin fold of an animal to be marked.

This known element has the objection that perforating an ear of an animal is rather difficult and often painful for the animal.

The invention provides an improved element of the type in question not having these draw-backs, and having the features recited in the characterising part of claim 1.

The sharp edge or edges provide a sharp incision in the skin of the animal with the least possible discomfort for the animal, and requiring a minimum force. Moreover the element can be made in a form allowing the element to be subcutaneously fixed by means of the barbs.

Favourable embodiments are mentioned in the subclaims.

From FR-A 2 464 642 an element for marking animals is known, which comprises a pointed stem provided with a tag, said pointed stem is to be driven through the ear fold of an animal and is then retained in a retaining disc at the other side of the ear, the pointed tip of the stem being used for pinching the ear. This will, however, cause a rather large wound in the ear which, apart from being painful, will not easily heal. Moreover, the tag portion of this element will not be applied flatly against the upper skin of the animal, so that it is possible that the tag will be torn off by external forces, e.g. by the animal rubbing its head along a fixed surface.

The invention will be elucidated below in more detail by reference to a drawing, showing in:

Fig. 1 a simplified circuit diagram of an example of the electrical circuit present in a marking element according to the invention;

Fig. 2 a diagrammatical section of a first embodiment of a marking element according to the invention;

Fig. 3 a representation in perspective of a tool for shooting an element of Fig. 2; and

Figs. 4A and B views, partially in section, of two other embodiments of a marking element according to the invention.

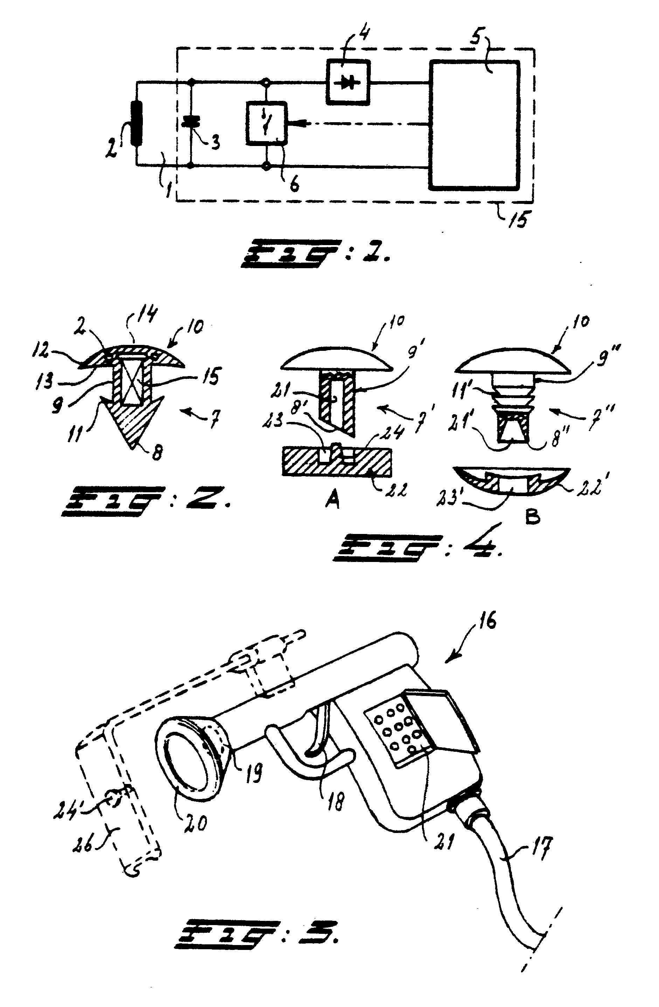

In Fig. 1 a circuit diagram of a circuit is shown which is known per se and is used, for instance, in a neck-collar for cows.

This circuit comprises a resonance circuit 1 consisting of an induction coil 2 and a capacitor 3, and tuned to a frequency to be transmitted by a transmitter/receiver not shown. The resonance circuit 1 is connected, by means of a rectifier 4, to an encoder 5. When the circuit 1 comes in the vicinity of the transmitter/receiver, energy is picked up from the field of the latter, and the rectifier 4 can supply a feeding current to the encoder 5. If said current is sufficiently strong, the encoder becomes operative, and then an electronic switch 6 bridging the resonance circuit 1 is closed and opened again according to a given code. When short-circuiting the circuit the latter does no longer pick up energy from the transmitter field. This switching on and off of the circuit 1 can be detected by the receiver section of the transmitter/receiver which, then, brings the code of the encoder 5 in some form which is suitable for further processing and/or reproduction.

The encoder 5 is programmed so that a code identifying a marked animal can be delivered. This can be done in the factory, e.g. with a series of sequential numbers, but it is also possible to use encoder circuits 5 which can be encoded by the user. In view of the very small dimensions required for the marking elements in question, circuits which are programmable by means of external fields are suitable for the latter purpose. To that end the circuit 1 can be used as a receiver for the programming signals.

In Fig. 2 an embodiment of a marking element 7 according to the invention is shown. This element is a plastics body having substantially the shape of a collar stud with a tip 8, a stem 9 and a disc 10.

The tip 8 is pointed in such a manner that it can penetrate through the skin of an animal under the driving force of a shooting tool, and its rear edge 11 forms a barb which prevents that the tip 8 is driven outwards again. In the case of a flat tip both edges 11 can be off-set in opposite directions.

After driving in said element 7, its disc 10 will be seated against the skin surface. The edge 12 thereof is bevelled so that in the final condition, a smooth contact with the skin is obtained so as to prevent that the marking element will be pulled outwards. The lower surface 13 of the disc 10 can, in particular, be slightly concavely curved so that, when being driven, the edge 10 will be elastically flexed to some degrees which enhances a flat engagement. The central part 14 of the disc surface is flattened and can, for instance, be provided with a visible mark or be differently coloured so that the marking element can be easily traced.

The plastics body 7 is formed around a circuit wafer 15 carrying as much elements of the electrical circuit as possible. The coil 2 and associated ferrite core is included in the disc 10. The wafer 15 can, as shown, be included in the stem 9; if, however, the dimensions thereof are sufficiently small, the wafer 15 can also be included in the disc 10.

The tip 8 is to be shaped in such a manner that, on the one hand, it will penetrate through the skin surface without substantial damage, and, on the other hand, provides a sufficient barb action. The disc 10 should be sufficiently large for accommodating the coil 2 and/or the wafer 15, and, on the other hand, its dimensions are determined by the kind of shooting tool. The tip 8 has a more or less flattened shape with knife-like cutting edges which facilitates the penetration into the skin without making a large wound.

If the circuit wafer 15 is included in the disc 10, a recess can be provided in the stem 9, in particular in the case of a flattened tip 8, which allows a certain elastic deformation thereof which may simplify the penetration of the barbs 11.

The fact that the disc 10 with the coil 2 remains seated outside the skin has the advantage that the coil 2 is not screened by skin or fat tissue. The visibility thereof will facilitate directing the transmitter/receiver as well as removing the marking element after slaughtering.

The driving tool can be of any suitable construction, e.g. as used for driving nails and staples. Preference is given to a pneumatic tool since such a tool will be perfectly safe in unfavourable conditions (such as damp stables etc.), can provide a constant stroke force, and does not require muscle force as in shooting devices having a driving spring to be tensioned by hand.

Fig. 3 shows, in a diagrammatical way, such a tool in the form of a gun 16 with an air supply hose 17, an actuating trigger 18 and, on the exit opening 19, a distance piece 20 to be placed on the skin of the animal to be marked. A built-in code input circuit is provided with a keyboard 21 or the like for setting a desired code. It will be clear that such a tool can be realised in many other ways.

If such a marking element is used for marking animals to be slaughtered, in which case the residence time of said element in the animal is short, use can be made of industrial plastics material. The chance that ulcerisation by infection takes place, causing the element to be driven outwards, is, then, small.

If a prolonged marking is desired, plastics which are currently used for medical purposes and which can be sterilised will be used.

Fig. 4A shows another embodiment 7' of the marking element of Fig. 2, in which corresponding parts have been indicated by the same reference numerals. The stem 9' is now made in the form of a hollow pin with a bevelled tip 8'. In this case the circuit wafer 15 is, of course, to be included in the disc 10.

This embodiment is, in particular, designed for being driven through an ear of skin fold of an animal to be marked, and the sharp end, in particular, bevelled tip 8' and the bore 21 thereof facilitate the penetration in and through the skin.

At the other side of the ear of skin fold a securing disc 22 made of plastics is placed in such a manner that the pin 9', after penetrating through the ear or skin fold, is driven into a recess 23 thereof in which this pin closely fits. The bottom of the recess 23 carries a mandrel 24. The latter penetrates into the bore 21 of the pin 9' so that its extremity is expanded so that the ring 22 is firmly secured on the pin 9'.

Also when using a marking element 7 of Fig. 2, a securing disc 22 can be used which can be solid in that case, and will act as a fat layer, the barbs 11 then providing the securing effect.

Fig. 4B shows still another embodiment 7", in which only the sharp-edged extremity 8" of the stem 9" is hollow, and the outer surface of the latter is provided with saw-tooth shaped ribs 11'. The securing disc 22' has now a through hole 23' in which the extremity 8" fits. One or more ribs 11' are driven under deformation into the opening 23' and can expand beyond the ring, so that an unbreakable locking is obtained. If required a metal ring having resilient lips can be included in said ring 22', or resilient lips can be formed on said ring, said lips co-operating with the ribs 11'.

The disc 22' shown has an elastic edge portion 25 corresponding to the edge 12 for bringing about a resilient pinching which, when the ear or skin fold becomes thicker because of growth of the marked animal, can yield.

For applying an element of Fig. 4 the tool 16 of Fig. 3 can be used again, which, then, is to be provided with a supporting surface at the other side of the ear or skin fold, which is shown in Fig. 3 at 26 with interrupted lines, and in which securings discs 22 and 22' can be supported in front of the outlet opening 19. If desired this surface can be provided with a fixed mandrel 24' for expanding the extremity of the pin 9' of Fig. 4A, if the discs 22 are not provided with a mandrel 24.

Such elements can be applied very deeply in the ear where the risk of getting loose by scratching, biting or the like will not occur, and, moreover, it is not necessary to make a hole in the ear first as in the case of the known ear-marks.

It will be clear that the embodiment shown in Figs. 2 and 4 are only given by way of example, and that many modifications thereof are possible.

The marking elements are not only suitable for marking animals to be slaughtered for simplifying the work in the slaughterhouse, but are also suitable for marking young animals, e.g. after having received the required culations, since such an element can be left during the whole life-time of the animal.

## Claims

1. A marking element for marking animals or the like, comprising electrical circuit elements (1..6) adapted to absorb field energy from the field of a transmitter and for influencing said field in correspondence with an included code in such a manner that this can be detected by the transmitter, and comprising a more or less disc-shaped plate (10) having a substantially flat rear surface, and a stem or pin (9) transversely extending therefrom, the latter being adapted to be inserted through the upper skin of an animal to be marked, and to be secured at the other side of the skin, **characterised** in that the stem or pin (9) has a tip having one or more sharp knife-like edges (8, 8', 8'') adapted to be directly driven through the skin by means of a shooting or pressing tool (16), this in such a manner that said stem or pin (9) itself acts as the perforating element by means of a cutting action, in which disc (10) a pickup coil (2), in particular provided with ferrite core, for picking up field energy is included, said stem or pin (9) being provided with retaining means (11, 11', 21, 21') adapted to lock said stem or pin after being driven into the skin by cutting action.

2. The marking element of claim 1, **characterised** in that the disc has a somewhat elastically flexible edge (12). (Fig. 2).

3. The marking element according to claim 1 or 2, **characterised** in that the retaining means comprise one or more barbs (11) or one or more circumferential ribs (11') acting as barbs, provided rearwardly of said sharp edge (8, 8'') on the stem (9, 9'').

4. The marking element according to any one of claims 1..3, **characterised** in that at least near its sharp-edged extremity (8, 8', 8'') the stem (9', 9'') is hollow (21, 21').

5. The marking element according to any one of claims 1..4, adapted to be fixed in an ear or a skin fold of an animal to be marked by means of a securing disc (22, 22') to be fastened on the stem (9', 9''), **characterised** in that the securing disc (22, 22') is made of plastics, and is adapted to secure the stem (9', 9'') of the marking element (7', 7'') driven therein.

6. The marking element of claims 4 and 6, **characterised** in that the disc (22, 22') is provided with a recess or hole (23, 23') in which the stem (9', 9'') fits.

7. The marking element of claim 6, **characterised** in that a mandrel (24, 24') is or can be provided in the disc (22), said mandrel being adapted to be driven into the bore (21) of the stem (9') for expanding said stem.

8. The marking element of any one of claims 5..7, **characterised** in that the securing disc (22) is disc-shaped with a more or less elastically flexible rim (25).

## Revendications

1. Elément de marquage d'animaux ou analogues, comprenant des éléments (1 .. 6) de circuit électrique prévus pour absorber de l'énergie du champ d'un émetteur et pour influencer ledit champ suivant un code inclus de manière que ceci puisse être détecté par l'émetteur, et comprenant une plaque (10) plus ou moins en forme de disque ayant une surface arrière pratiquement plate, et une tige ou une aiguille (9) s'en écartant transversalement, cette dernière étant adaptée pour être insérée dans la peau supérieure d'un animal à marquer, et pour être fixée de l'autre côté de la peau, caractérisé en ce que la tige ou aiguille (9) a un bout qui a un ou plusieurs bords aigus en forme de couteaux (8, 8', 8'') prévus pour être directement passés dans la peau au moyen d'un outil à percussion ou à pression (16), de telle manière que ladite tige ou aiguille (9) agisse elle-même comme l'élément de perforation au moyen d'une action de découpage, dans le disque (10) étant incluse une bobine de pickup (2), pourvue en particulier d'un noyau de ferrite, pour recueillir l'énergie de champ, ladite tige ou aiguille (9) étant pourvue de moyens de retenue (11, 11', 21, 21') prévus pour verrouiller ladite tige ou aiguille après le passage dans la peau par l'action de découpage.

2. Elément de marquage de la revendication 1, caractérisé en ce que le disque a un bord souple quelque peu élastiquement flexible (12) (Fig. 2).

3. Elément de marquage suivant la revendication 1 ou 2, caractérisé en ce que les moyens de retenue comprennent une ou plusieurs barbes (11) ou une ou plusieurs nervures circulaires (11') agissant comme des barbes, pourvues à l'arrière dudit bord aigu (8, 83) sur la tige (9, 9'').

4. Elément de marquage suivant l'une des revendications 1 .. 3, caractérisé en ce qu'au moins près de son extrémité à bord aigu (8, 8', 8''), la tige (9', 9'') est creuse (21, 21').

5. Elément de marquage suivant l'une des revendications 1 .. 4, prévu pour être fixé dans une oreille ou un pli de la peau d'un animal à marquer au moyen d'un disque de fixation (22, 22') à fixer sur la tige (9', 9''), caractérisé en ce que le disque de fixation (22, 22') est en plastique et est prévu pour fixer la tige (9', 9'') de l'élément de marquage (7', 7'') qui y est passée.

6. Elément de marquage des revendications 4 et 6, caractérisé en ce que le disque (22, 22') est pourvu d'un creux ou d'un trou (23, 23') dans lequel s'adapte la tige (9', 9'')

7. Elément de marquage de la revendication 6, caractérisé en ce qu'un mandrin (24, 24') est ou peut être prévu dans le disque (22), ledit mandrin étant prévu pour passer dans le trou (21) de la tige (9') pour la dilater.

8. Elément de marquage suivant l'une des revendications 5 à 7, caractérisé en ce que le disque de fixation (22) est en forme de disque avec un bord plus ou moins élastiquement flexible (25).

**Patentansprüche**

1. Markierungselement für Tiere oder dergleichen bestehend aus elektrischen Schaltkreiselementen (1..6), die geeignet sind, Feldenergie von dem Feld eines Senders zu absorbieren und dieses Feld entsprechend einem eingefügten Code derart zu beeinflussen, daß dies von dem Sender festgestellt werden kann, aus einer mehr oder weniger scheibenförmige Platte (10) mit einer im wesentlichen flachen Rückseite und aus einem Stab oder Stift (9) der sich transversal davon erstreckt, wobei letzterer geeignet ist, durch die Oberhaut des zu markierenden Tieres eingesetzt zu werden und auf der anderen Seite der Haut befestigt zu werden, dadurch gekennzeichnet, daß der Stab oder Stift (9) eine Spitze mit einem oder mehreren scharfen, messerartigen Rändern (8, 8', 8'') besitzt, die geeignet sind, mittels eines Schuss- oder Pressgeräts (16) derart direkt durch die Haut eingesetzt zu werden, daß der Stab oder Stift (9) selbst mit Hilfes einer Schneidewirkung als Bohrelement dient, wobei in der Scheibe (10) eine Aufnahmespule (2), insbesondere mit einem Ferritkern, zum Auffangen von Feldenergie eingefügt ist, wobei der Stab oder Stift (9) mit Rückhaltemitteln (11, 11', 21, 21'') versehen ist, die geeignet sind, den Stab oder Stift nach dem durch die Schneidewirkung Eintreiben in die Haut zu verriegeln.

2. Markierungselement nach Anspruch 1, dadurch gekennzeichnet, daß die Scheibe einen etwas elastisch biegsamen flexiblen Rand (12) besitzt (Fig. 2).

3. Markierungselement nach Anspruch 1 oder 2, dadurch gekennzeichnet, daß des Rückhaltemittel einen oder mehrere Widerhaken (11) oder eine oder mehrere als Widerhaken wirkende Umfangsrippen (11') besitzt, die hinter den scharfen Rand (8, 8'') auf dem Stab (9, 9'') angeordnet sind.

4. Markierungselement nach einem der Ansprüche 1..3, dadurch gekennzeichnet, daß der Stab (9, 9'') wenigstens in der Nähe seines scharfkantigen Endes (8, 8', 8'') hohl (21, 21') ist.

5. Markierungselement nach einem der Ansprüche 1..4, das geeignet ist in einem Ohr oder einer Hautfalte eines zu markierenden Tiers mittels einer an dem Stab (9', 9'') zu befestigenden sicherungsscheibe (22, 22') befestigt zu werden, dadurch gekennzeichnet, daß die Sicherungsscheibe (22, 22') aus Kunststoff besteht und geeignet ist, den Stab (9', 9'') des darin hineingetriebenen Markierungselement (7, 7'') zu sichern.

6. Markierungselement nach Anspruch 4 und 5, dadurch gekennzeichnet, daß die Scheibe (22, 22') mit einer Vertiefung oder einem Loch (23, 23') versehen ist, in das der Stab (9', 9'') paßt.

7. Markierungselement nach Anspruch 6, dadurch gekennzeichnet, daß ein Dorn (24, 24') in der Scheibe (22) vorgesehen ist oder vorgesehen werden kann, welcher Dorn geeignet ist, in die Bohrung (21) des Stabs (9') eingesetzt zu werden, um den Stab zu erweitern.

8. Markierungselement nach einem der Ansprüche 5..7, dadurch gekennzeichnet, daß die Sicherungsscheibe (22) scheibenförmig mit einem mehr oder weniger elastischen Rand (25) ist.

_FIG : 2._

_FIG : 3._

_FIG : 4._

_FIG : 5._